(19) Europäisches Patentamt
European Patent Office
Office européen des brevets

(11) **EP 2 105 427 B1**

(12) **EUROPEAN PATENT SPECIFICATION**

(45) Date of publication and mention
of the grant of the patent:
**16.03.2011 Bulletin 2011/11**

(51) Int Cl.:
*C04B 38/00* (2006.01)     *B01D 46/24* (2006.01)
*B01J 35/04* (2006.01)

(21) Application number: **08168589.3**

(22) Date of filing: **07.11.2008**

(54) **Honeycomb structured body**

Wabenstrukturkörper

Corps structuré en nid d'abeille

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.03.2008 PCT/JP2008/055463**

(43) Date of publication of application:
**30.09.2009 Bulletin 2009/40**

(73) Proprietor: **Ibiden Co., Ltd.**
**Ogaki-shi, Gifu 503-8604 (JP)**

(72) Inventors:
• **Ohno, Kazushige**
**c/o IBIDEN CO., LTD.**
**Ibi-gun**
**Gifu 501-0695 (JP)**

• **Fujita, Yuki**
**c/o IBIDEN CO., LTD**
**Ibi-gun**
**Gifu 501-0695 (JP)**

(74) Representative: **HOFFMANN EITLE**
**Patent- und Rechtsanwälte**
**Arabellastraße 4**
**81925 München (DE)**

(56) References cited:
**EP-A- 0 241 269      DE-A1-102006 036 498**
**US-A1- 2005 266 992      US-A1- 2007 068 128**

## Description

TECHNICAL FIELD

The present invention relates to a honeycomb structured body.

BACKGROUND ART

As a honeycomb catalyst in which a catalyst component is supported on a honeycomb structured body for use in conversion of exhaust gases discharged from vehicles, there has been proposed a honeycomb catalyst in which a material having a high specific surface area such as active alumina and a catalyst metal such as platinum are supported on the surface of a cordierite-base honeycomb structured body having an integral structure and a low thermal expansion property.

Moreover, as an example of the honeycomb catalyst of this kind, there has been know a honeycomb catalyst in which an alkali-earth metal such as Ba serving as a NOx absorbing agent, and the like is supported thereon so as to be used for NOx treatment in an atmosphere with excessive oxygen, such as an atmosphere in a lean burn engine or a diesel engine.

Here, in order to improve the conversion performance, it is necessary to increase the probability of contact between exhaust gases and a catalyst noble metal as well as the NOx absorbing agent. For this purpose, a supporting carrier needs to have a higher specific surface area, and also the noble metal needs to have a small particle size and further needs to be highly dispersed. As an example of a honeycomb structured body formed by using a material having a high specific surface area, a honeycomb structured body manufactured by extrusion-molding a mixture of an inorganic binder with inorganic particles and inorganic fibers has been known.
Moreover, as an example of the honeycomb structured body of this kind, a honeycomb structured body in which a plurality of honeycomb fired bodies are combined with one another by interposing adhesive layers has been known (for example, see Patent Document 1).

The honeycomb structured body disclosed in Patent Document 1 is a honeycomb structured body manufactured by combining a plurality of rectangular pillar-shaped honeycomb fired bodies by interposing an adhesive layer therebetween, and then cutting the combined honeycomb fired bodies into a predetermined shape.
In a cross-section perpendicular to the longitudinal direction of the honeycomb structured body, the honeycomb fired bodies each having a rectangular cross sectional shape are located in the center portion, and the honeycomb fired bodies each having a cross-sectional area smaller than that of the honeycomb fired body in the center portion are located in the peripheral portion.

Patent Document 1: WO 05/063653 A1

DISCLOSURE OF THE INVENTION

PROBLEMS TO BE SOLVED BY THE INVENTION

Upon using a honeycomb structured body as a honeycomb catalyst, high-temperature exhaust gases discharged from an internal combustion engine flow into through holes of the honeycomb structured body. At this time, since the exhaust gases tend to flow in the through holes of the honeycomb fired bodies located in the center portion, much heat is applied to the honeycomb fired bodies located in the center portion, and thus the temperature of those honeycomb fired bodies is more likely to increase than the honeycomb fired bodies located in the peripheral portion.
For this reason, temperature distribution occurs in the diameter direction of the honeycomb structured body.
In the case where the temperature distribution of this kind occurs, stress is applied to the peripheral face of the honeycomb structured body, and thus the honeycomb structured body may be damaged.

Further, since the catalyst supported on the honeycomb structured body has characteristics of exerting its gas-conversion function when activated under a high temperature condition, the catalyst cannot fully exert the function when the temperature of the honeycomb structured body is low, for example, at the time when the engine is started.
Therefore, desirably, the temperature of the honeycomb structured body is easily increased.

However, in a honeycomb structured body in which a plurality of honeycomb fired bodies are combined with one another by interposing an adhesive layer therebetween (hereinafter, also referred to as aggregated honeycomb structured body), since the heat capacity of the adhesive layer is usually higher than that of the honeycomb fired body, the presence of the adhesive layers prevents the temperature from rising in the honeycomb structured body.

According to a honeycomb structured body particularly of the kind disclosed in Patent Document 1, honeycomb fired bodies having a cross-sectional area smaller than that of the center-portion honeycomb fired bodies are located in the peripheral portion. The presence of those honeycomb fired bodies having a smaller cross-sectional area causes a problem that the ratio of the adhesive layer is increased and as a result the heat capacity of the honeycomb structured body is increased.

The present invention has been devised to solve the above-mentioned problems. Thus, the present invention aims to provide a honeycomb structured body which can prevent the damage to the honeycomb structured body caused by the force applied to a radial direction and also has a low heat capacity.

MEANS FOR SOLVING THE PROBLEMS

Namely, a honeycomb structured body according to claim 1 comprises a plurality of pillar-shaped honeycomb fired bodies combined with one another by interposing an adhesive layer therebetween, each of the honeycomb fired bodies having a large number of through holes, which are longitudinally formed in parallel with one another and divided by a partition wall, wherein

the honeycomb fired bodies comprise inorganic particles and an inorganic binder

a cross section perpendicular to the longitudinal direction of the honeycomb structured body includes a peripheral portion of the honeycomb structured body and a center portion of the honeycomb structured body, the center position having a rectangular cross-sectional shape and bling located at the inner side of the peripheral portion,

the honeycomb fired bodies include a center-portion honeycomb fired body located in the center portion and a peripheral-portion honeycomb fired body located in the peripheral portion,

the center portion comprises a single piece of the center-portion honeycomb fired body, or a plurality of the center-portion honeycomb fired bodies combined with one another by interposing the adhesive layer therebetween,

the center-portion honeycomb fired body has a square cross-sectional shape perpendicular to the longitudinal direction of the honeycomb structured body,

the center-portion honeycomb fired body has an area of 2500 to 5000 mm$^2$ in the cross-section,

the peripheral portion comprises a plurality of the peripheral-portion honeycomb fired bodies combined with one another by interposing the adhesive layer therebetween,

a cross-sectional shape perpendicular to the longitudinal direction of the peripheral-portion honeycomb fired body is different from a cross-sectional shape perpendicular to the longitudinal direction of the center-portion honeycomb fired body, and

a crosa-sectional area perpendicular to the longitudinal direction of each of the peripheral-portion honeycomb fired bodils is 0.9 to 1.3 times larger than across-sectional area perpendicular to the longitudinal direction of the center-portion honeycomb fired body.

In the present invention, the center-portion honeycomb fired body refers to a honeycomb fired body which does not constitute a peripheral side surface of the honeycomb structured body in a cross section perpendicular to the longitudinal direction of the honeycomb structured body.

The honeycomb structured body described in claim 1 contains inorganic particles and an inorganic binder. By containing inorganic particles, it is possible to provide a honeycomb structured body having a high specific surface, which can be preferably used as a honeycomb catalyst having a catalyst supported thereon.

The center-portion honeycomb fired body has a cross-sectional area of 2500 to 5000 mm$^2$ in the cross section perpendicular to the longitudinal direction. When the cross sectional area is less than 2500 mm$^2$, the honeycomb fired body is small. Therefore, it is necessary to manufacture a honeycomb structured body by combining a large number of the honeycomb fired bodies. In this case, the relative ratio of the adhesive layer is increased, resulting in a high heat capacity of the honeycomb structured body.

On the other hand, a honeycomb fired body having the cross-sectional area of more than 5000 mm$^2$ is easily damaged by thermal shock.

In the honeycomb structured body according to claim 1, among the plurality of honeycomb fired bodies combined with one another by interposing an adhesive layer therebetween, the cross-sectional area perpendicular to the longitudinal direction of the peripheral-portion honeycomb fired bodies is 0.9 to 1.3 times larger than the cross-sectional area perpendicular to the longitudinal direction of the center-portion honeycomb fired body. Therefore, since no honeycomb fired bodies having an extremely small cross-sectional area are located in the peripheral portion of the honeycomb structured body and thus the relative ratio of the adhesive layer is small, the heat capacity of the honeycomb fired body is low.

As a result, the temperature of the honeycomb structured body increases easily so that the catalyst can fully exert the conversion function.

When the cross-sectional area of the peripheral-portion honeycomb fired body is less than 0.9 times that of the center-portion honeycomb fired body, the ratio of the adhesive layer becomes large in the peripheral portion of the honeycomb structured body.

On the other hand, when the cross sectional area of the peripheral-portion honeycomb fired body is more than 1. 3 times that of the center-portion honeycomb fired body, crack may occur in the honeycomb fired body due to thermal stress.

In the honeycomb structured body according to claim 2

a cross section perpendicular to the longitudinal direction of the honeycomb structured body includes at least one adhesive layer formed in a direction extending from a corner point of the center portion to a peripheral side surface of the honeycomb structured body, among the adhesive layers in the peripheral portion, and

the adhesive layer extending from a corner point of the center portion to the peripheral side surface of the honeycomb structured body forms an angle of 40 to 50 degrees with at least one adhesive layer formed in a direction extending from a point other than the corner points of the center portion to the peripheral side surface of the honeycomb structured body.

Hereinafter, in the present specification, an adhesive layer formed in a direction extending from a corner point of the center portion to the peripheral side surface of the honeycomb structured body is also referred to as "first peripheral-portion adhesive layer", and an adhesive layer formed in a direction extending from a point other than the corner points of the center portion to the peripheral side surface of the honeycomb structured body is also referred to as "second peripheral-portion adhesive layer", among the adhesive layers in the peripheral portion.

Further, the angle formed by the first peripheral-portion adhesive layer and the second peripheral-portion adhesive layer refers to an angle formed by a straight line passing in the first peripheral-portion adhesive layer and a straight line passing in the second peripheral-portion adhesive layer.

In the present invention, the center portion in a cross section perpendicular to the longitudinal direction of the honeycomb structured body refers to an area occupied by the center portion honeycomb fired body, the adhesive layers combining the center-portion honeycomb fired bodies with one another, and the adhesive layers combining the center portion honeycomb fired body with the peripheral-portion honeycomb fired body. Moreover, the peripheral portion in the cross section perpendicular to the longitudinal direction of the honeycomb structured body refers to an area occupied by the peripheral-portion honeycomb fired bodies and the adhesive layers combining the peripheral-portion honeycomb fired bodies with one another.

The honeycomb structured body according to claim 2 includes the center portion and the peripheral portion. In the peripheral portion located outside the center portion, a plurality of the peripheral-portion honeycomb fired bodies forming a part of the peripheral side surface of the honeycomb structured body are combined with one another by interposing the adhesive layer therebetween.

In the cross section perpendicular to the longitudinal direction of the honeycomb structured body, an angle formed by at least one of the adhesive layers (first peripheral-portion adhesive layer) extending from a corner point of the center portion to the peripheral side surface of the honeycomb structured body and at least one of the adhesive layers (second peripheral-portion adhesive layer) extending from a point other than the corner points to the peripheral side surface of the honeycomb structured body out of the adhesive layers existing between the peripheral-portion honeycomb fired bodies, is 40° to 50°.

Therefore, damages in the honeycomb structured body due to compression stress applied from the peripheral surface can be prevented from occurring.

On the other hand, in the honeycomb structured body disclosed in Patent Document 1, adhesive layers are formed in a lattice pattern. Thus, although the honeycomb structured body has high strength against compression stress applied in a specific direction (direction parallel to the adhesive layer) from the peripheral surface, it has low strength against compression stress applied in other directions, for example, a direction forming an angle of 45° with the adhesive layer, and as a result damages often occur in the honeycomb structured body.

The honeycomb structured body according to claim 3 includes a plurality of the center-portion honeycomb fired bodies and a plurality of the peripheral-portion honeycomb fired bodies,

wherein the cross-sectional surface areas of the plurality of the center-portion honeycomb fired bodies are the same with each other, and

the cross-sectional surface areas of the plurality of the peripheral-portion honeycomb fired bodies are the same with each other.

The above-mentioned structure makes it easier to manufacture a honeycomb structured body.

In the honeycomb structured body described in claim 4, the cross-sectional shape perpendicular to the longitudinal direction of the peripheral-portion honeycomb fired body is formed into a shape surrounded by three line segments and one curved line, and

two angles made by the two line segments out of the three line segments are a right angle and an obtuse angle.

The honeycomb structured body described in claim 5 further comprises an inorganic fiber.

In the honeycomb structured body described in claim 6, the inorganic fiber comprises at least one kind selected from the group consisting of alumina, silica, silicon carbide, silica-alumina, glass, potassium titanate, and aluminum borate. When the inorganic fiber is included, the strength of the honeycomb structured body can be further improved.

In the honeycomb structured body described in claim 7, a catalyst is supported on the partition wall. Further, in the honeycomb structured body described in claim 8, the catalyst comprises at least one kind selected from the group consisting of a noble metal, an alkali metal, and an alkali earth metal.

Moreover, in the honeycomb structured body described in claim 9, the noble metal comprises platinum, palladium, or rhodium.

Moreover, in the honeycomb structured body described in claim 10, the alkali metal comprises potassium or sodium. Moreover, in the honeycomb structured body described in claim 11, the alkali earth metal comprises magnesium, barium, or calcium.

In the honeycomb structured body described in claim 12, the inorganic binder comprises at least one kind selected from the group consisting of alumina sol, silica sol, titania sol, water glass, sepiolite, and attapulgite.

Hereinafter, in the present specification, the cross section perpendicular to the longitudinal direction of the honeycomb structured body, the cross section perpendicular to the longitudinal direction of the honeycomb fired body, and the cross section perpendicular to the longitudinal direction of the honeycomb molded body may be simply referred to as the cross section of the honeycomb structured body, the cross section of the honeycomb fired body, and the cross section of the honeycomb molded body, respectively.

Moreover, in the present specification, the cross-sectional area perpendicular to the longitudinal direction of the honeycomb structured body, the cross-sectional area perpendicular to the longitudinal direction of the honeycomb fired body, and the cross-sectional area perpendicular to the longitudinal direction of the honeycomb molded body may be simply referred to as the cross-sectional area of the honeycomb structured body, the cross-sectional area of the honeycomb fired body, and the cross-sectional area of the honeycomb molded body, respectively.

As described above, the honeycomb fired bodies used for forming the honeycomb structured body of the present invention are distinguished as the center-portion honeycomb fired bodies and the peripheral-portion honeycomb fired bodies. However, in the present specification, when it is not necessary to distinguish the two kinds of the honeycomb fired bodies, each of the honeycomb fired bodies is simply described as the honeycomb fired body.

BEST MODE FOR CARRYING OUT THE INVENTION

(First embodiment)

Referring to the drawings, the following description will discuss a first embodiment that is one embodiment of the honeycomb structured body according to the present invention.

Fig. 1 is a perspective view schematically showing a honeycomb structured body according to the first embodiment.

Fig. 2 is a perspective view schematically showing a center-portion honeycomb fired body in the honeycomb structured body according to the first embodiment.

Fig. 3 is a perspective view schematically showing a peripheral-portion honeycomb fired body according to the first embodiment. Fig. 4 is an A-A line cross-sectional view of the honeycomb structured body shown in Fig. 1.

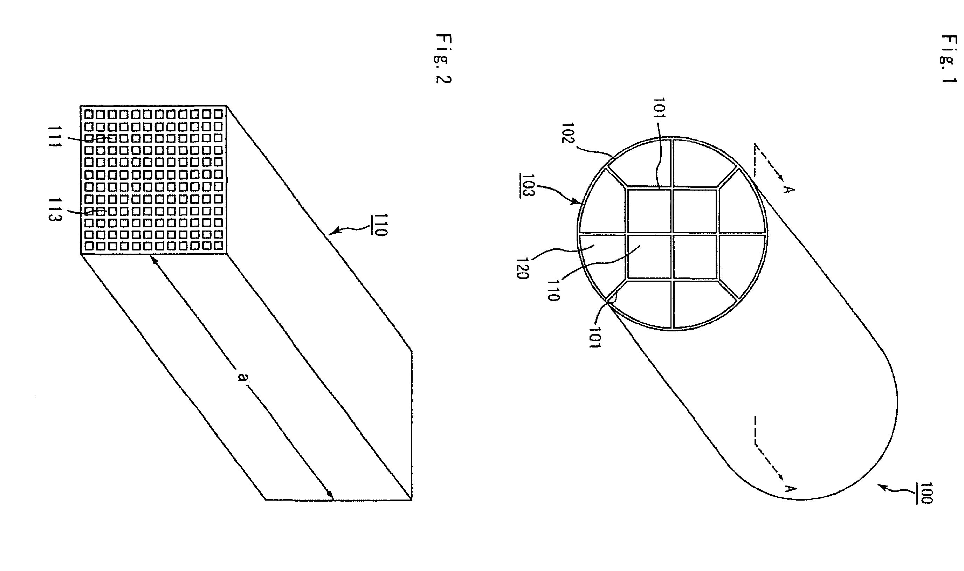

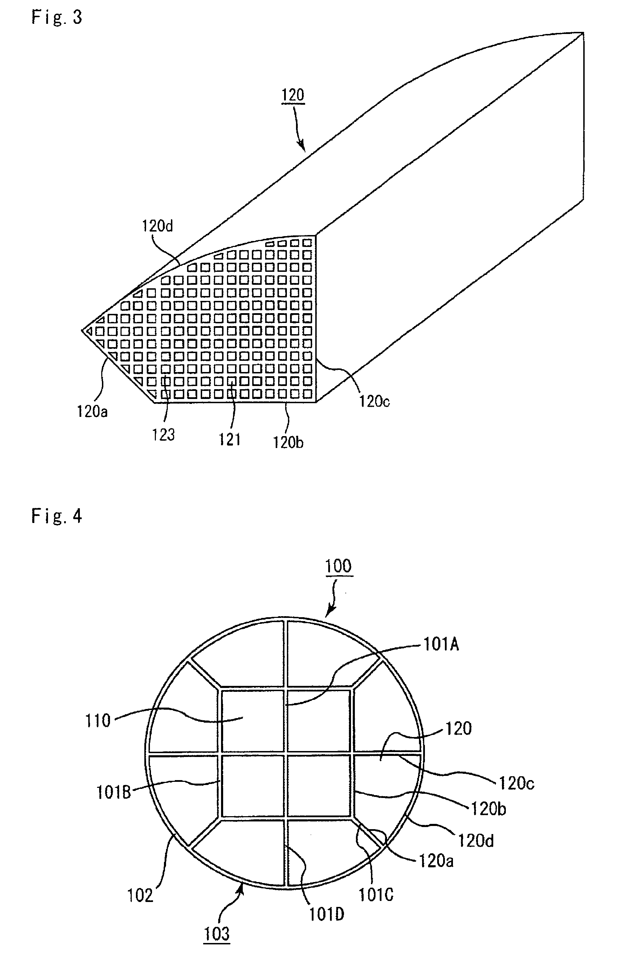

In a honeycomb structured body 100 shown in Fig. 1 and Fig. 4, a plurality of center-portion honeycomb fired bodies 110 having a shape shown in Fig. 2 and a plurality of peripheral-portion honeycomb fired bodies 120 having a shape shown Fig. 3 are combined with one another, with an adhesive layer 101 (101A, 101B, 101C, 101D) interposed therebetween, to form a ceramic block 103. A coat layer 102 is further formed on the periphery of the ceramic block 103.

The shape of the cross section of each of the center-portion honeycomb fired bodies 110 is a square.

The cross section of each of the peripheral-portion honeycomb fired bodies 120 is formed into a shape that is surrounded by three line segments 120a, 120b and 120c and an arc 120d. The two angles made by two line segments out of these three line segments (an angle formed by the line segment 120b and the line segment 120c and an angle formed by the line segment 120a and the line segment 120b) are 90° and 135°, respectively.

In the center-portion honeycomb fired body 110 shown in Fig. 2, a large number of through holes 111 are placed in parallel with one another by interposing a partition wall 113 therebetween, in a longitudinal direction (direction shown by an arrow a in Fig. 2).

A catalyst for converting exhaust gases is supported on the partition wall 113.

Since the through holes 111 allow a fluid such as exhaust gases to flow therethrough, and the catalyst for converting exhaust gases is supported on the partition wall 113, toxic components contained in the exhaust gases are converted by the action of the catalyst.

In the same manner as in the center-portion honeycomb fired body 110, the peripheral-portion honeycomb fired body 120 shown in Fig. 3 has a structure in which a large number of through holes 121 are longitudinally placed in parallel with one another by interposing a partition wall 123 therebetween.

A catalyst for converting exhaust gases is also supported on the partition wall 123, and thus exhaust gas passing through the through hole 121 is converted by the action of the catalyst.

That is, although the outer shape of the peripheral-portion honeycomb fired body 120 is different from that of the center-portion honeycomb fired body 110, the peripheral-portion honeycomb fired body 120 has the same functions as those of the center-portion honeycomb fired body 110.

As shown in Fig. 1 and Fig. 4, in the honeycomb structured body 100, four pieces of the center-portion honeycomb fired bodies 110 are located in the center portion of the cross section of the honeycomb structured body 100, and eight pieces of the peripheral-portion honeycomb fired bodies 120 are located on the periphery of the four pieces of center-portion honeycomb fired bodies. These honeycomb fired bodies are combined with one another with an adhesive layer 101 interposed therebetween so that the cross section of the honeycomb structured body 100 (ceramic block 103) is formed into a round shape.

Further, as shown in Fig. 4, the four pieces of center-portion honeycomb fired bodies 110 combined by interposing the adhesive layer 101A form the center portion in a cross section of the honeycomb structured body 100, and the eight pieces of peripheral-portion honeycomb fired bodies 120 combined by interposing the adhesive layers 101C and 101D form the peripheral portion in a cross section of the honeycomb structured body 100.

In the cross section (see Fig. 4) of the honeycomb structured body 100 having the structure of the kind as mentioned above, the area occupied by the four pieces of the center-portion honeycomb fired bodies 110, the adhesive layers 101A combining the center-portion honeycomb fired bodies 110 with one another, and the adhesive layers 101B combining the center-portion honeycomb fired body 110 with the peripheral-portion honeycomb fired body 120 corresponds to the center portion. Also, the area occupied by the eight pieces of the peripheral-portion honeycomb fired bodies 120, and the adhesive layers 101C and 101D combining the peripheral-portion honeycomb fired bodies 120 with one another corresponds to the peripheral portion.

It is to be noted that the cross-sectional surface areas of the respective plurality of the center-portion honeycomb fired bodies 110 that form the honeycomb structured body 100 are the same with each other, and also the cross-sectional surface areas of the respective plurality of the peripheral-portion honeycomb fired bodies 120 that form the honeycomb structured body 100 are the same with each other.

In the cross section of the honeycomb structured body 100, out of the peripheral-portion adhesive layers 101C and 101D, the adhesive layer 101C (first peripheral-portion adhesive layer) formed in a direction extending from a corner point of the center portion to the peripheral side surface of the honeycomb structured body 100, and the adhesive layer 101D (second peripheral-portion adhesive layer) formed in a direction extending from a point other than the corner points of the center portion to the peripheral side surface of the honeycomb structured body form an angle of 45°.

When the first peripheral-portion adhesive layer and the second peripheral-portion adhesive layer form an angle of 45° as mentioned above, it is possible to prevent damages to the honeycomb structured body from occurring.

Moreover, in the honeycomb structured body 100, a Y-shape is formed by the first peripheral-portion adhesive layer 101C and the two adhesive layers 101B each combining the center portion honeycomb fired body 110 with the peripheral-portion honeycomb fired body 120 at the corner point of the above-mentioned center portion.

When the cross section of the honeycomb structured body includes a part in which the adhesive layers form a Y-shape as mentioned above, the structure is appropriate for absorbing the stress in the honeycomb structured body. As a result, damages in the honeycomb structured body can be prevented from occurring.

Further, in the cross section of the honeycomb structured body 100, the second peripheral-portion adhesive layer 101D and the adhesive layer 101A combining the center-portion honeycomb fired bodies 110 with one another form a straight line configuration.

Those adhesive layers can function as so called a beam to improve the strength of the honeycomb structured body.

Moreover, in the honeycomb structured body 100, the cross-sectional area of the peripheral-honeycomb fired body 120 is 0.9 to 1.3 times larger than that of the center-portion honeycomb fired body 110.

Therefore, since there is no honeycomb fired bodies having an extremely small cross-sectional area in the peripheral portion of the honeycomb structured body 100, the honeycomb structured body has a low heat capacity.

As a result, the temperature of the honeycomb structured body increases easily, and thus the conversion action of the catalyst can be fully exerted.

Moreover, in the honeycomb structured body 100, the cross-sectional area of the center-portion honeycomb fired body 110 is 2500 $mm^2$ to 5000 $mm^2$.

When the cross-sectional area is less than 2500 $mm^2$, since the honeycomb fired bodies are small, it is necessary to combine a large number of the honeycomb fired bodies to manufacture the honeycomb structured body. As a result, the relative ratio of the adhesive layer is increased, and thereby the heat capacity of the honeycomb structured body is increased.

The honeycomb fired bodies 100 and 120 include inorganic particles and an inorganic binder.

Since the specific surface is increased by the inclusion of the inorganic particles, the honeycomb fired bodies 100 and 120 can be preferably used as a catalyst carrier.

Particles including of alumina, silica, zirconia, titania, ceria, mullite, zeolite, and the like may be exemplified as the inorganic particles. Those particles may be used alone, or two or more kinds of those particles may be used in combination.

As the inorganic binder, an inorganic sol, a clay binder, or the like may be used. Examples of the inorganic sol include alumina sol, silica sol, titania sol, water glass, and the like. Examples of the clay binder include polychain-structure clays such as white clay, kaolin, montmorillonite, sepiolite, and attapulgite. Those inorganic binders may be used alone, or two or more kinds of the inorganic binders may be used in combination.

Preferable examples among the above are at least one kind selected from the group consisting of alumina sol, silica sol, titania sol, water glass, sepiolite, and attapulgite.

The inorganic sols, the clay binders, and the like contain moisture, and thus the inorganic binder is prepared by using the inorganic components that is remained after heating the inorganic sols, the clay binders, and the like to remove moisture therein.

The honeycomb fired bodies 110 and 120 may further include inorganic fibers.

The strength of the honeycomb fired bodies is improved by including the inorganic fibers.

Preferable examples of the inorganic fibers include inorganic fibers including alumina, silica, silicon carbide, silica-alumina, glass, aluminum borate whisker, potassium titanate, or the like. The inorganic fibers may be used alone, or two or more kinds of the inorganic fibers may be used in combination. Aluminum borate whisker is more preferable among the above inorganic fibers.

It is to be noted that, the inorganic fibers refer to inorganic fibers having an average aspect ratio (length/diameter) of more than five in this specification. Moreover, a preferable average aspect ratio of the inorganic fiber is from 10 to 1000. In the present specification, the inorganic fibers include a whisker.

Preferably, the above-mentioned adhesive layer is preferably formed by using, as raw materials, an adhesive paste containing the previously described inorganic particles, the inorganic fibers and/or whisker, the inorganic binder, and an organic binder.

The organic binder is not particularly limited, and examples thereof include polyvinyl alcohol, methylcellulose, ethylcellulose, carboxymethylcellulose, and the like.

The catalyst (metal catalyst) to be supported on the honeycomb structured body of the present embodiment is not particularly limited, and examples thereof include a noble metal, an alkali metal, an alkali earth metal, and the like. The catalyst may be used alone, or two or more kinds of them may be used in combination.

Examples of the noble metal include platinum, palladium, rhodium, and the like. Examples of the alkali metal include potassium, sodium, and the like. Examples of the alkali earth metal include barium, calcium, magnesium, and the like.

Examples of an application of the above-mentioned honeycomb structured body on which the catalyst is supported (honeycomb catalyst) are not particularly limited, and may be used as so called a three-way catalyst or NOx-converting catalyst for conversion of exhaust gases from vehicles.

Hereinafter, the method for manufacturing the honeycomb structured body of the present embodiment will be described.

A raw material composition is firstly prepared, and then the raw material composition is extrusion-molded so as to perform molding for manufacturing the honeycomb molded body having a predetermined shape.

An example of the raw material composition is a composition that includes the inorganic particles, and the inorganic fibers, and/or whisker as main ingredients, and further optionally includes the inorganic binder, the organic binder, an plasticizer, a lubricant, a dispersion medium, and a molding auxiliary so as to achieve an appropriate moldability.

In order to manufacture a honeycomb molded body having a cross section surrounded by three line segments and one arc, in which the two line segments out of the three line segments form two angles of a 90°-degree angle and a 135°-degree angle, or a honeycomb molded body having a rectangular cross section, a die for extrusion molding is appropriately used depending on the shapes of the aforementioned honeycomb molded bodies.

Then, the manufactured honeycomb molded body is cut in a predetermined length, and drying is performed by using a microwave drying apparatus, a hot-air drying apparatus, a dielectric drying apparatus, a reduced-pressure drying apparatus, a vacuum drying apparatus, a freeze drying apparatus, or the like.

Next, degreasing is performed by heating the honeycomb molded body in a degreasing furnace to remove organic components in the honeycomb molded body.

Conditions for degreasing are not particularly limited, and may appropriately be selected depending on the kinds and amount of the organic components contained in the honeycomb molded body. Preferably, the degreasing is performed at a temperature of about 400°C for about two hours.

Next, firing is performed to fire the degreased honeycomb molded body.

Conditions for firing are not particularly limited. Preferably, firing is performed at a temperature of from 500°C to 1200°C, and more preferably at a temperature in a range of 600°C to 1000°C.

By performing the above-mentioned procedures, the center-portion honeycomb fired bodies and the peripheral-portion honeycomb fired bodies can be manufactured.

Next, combining for manufacturing a ceramic block is performed by applying an adhesive paste on a predetermined side surface of each of the center-portion honeycomb fired body and the peripheral-portion honeycomb fired body so as to form an adhesive paste layer, placing another honeycomb fired body on the thus formed adhesive paste layer, and sequentially repeating the formation of an adhesive paste layer and the placement of another honeycomb fired body, thereby manufacturing a ceramic block in which a predetermined number of honeycomb fired bodies are combined with one another.

The adhesive paste to be used here may be the above-mentioned adhesive paste.

Next, a coat layer is formed by applying a coating material paste on the periphery of the ceramic block that has been formed in a cylindrical shape, and then drying and solidifying the coating material paste.

The coating material paste to be used here may be a paste that is similar to the above-mentioned adhesive paste. It is also possible to use a paste having a different composition from the adhesive paste as the coating material paste.

The coat layer is not necessarily provided, and may be formed depending on the needs.

Through the above-mentioned procedures, the honeycomb structured body according to the present embodiment can be manufactured.

The effects of the honeycomb structure of the present embodiment will be listed below.

(1) In the honeycomb structured body according to the present embodiment, the first peripheral-portion adhesive layer and the second peripheral-portion adhesive layer form an angle of 45°. Therefore, damages due to stress applied in various directions in the peripheral surface of the honeycomb structured body can be prevented from occurring in the honeycomb structured body.

(2) In the honeycomb structured body according to the present embodiment, the cross-sectional area of a cross section perpendicular to the longitudinal direction of the center-portion honeycomb fired body is 2500 $mm^2$ to 5000 $mm^2$. Therefore, the ratio of the adhesive layer is relatively small, and thus a honeycomb structured body having a low heat capacity can be provided.

Further, the honeycomb structured body thus obtained is not easily damaged by thermal shock.

(3) In the honeycomb structured body according to the present embodiment, the cross-sectional area of the peripheral-portion honeycomb structured body is 0.9 to 1.3 times larger than the cross-sectional area of the center-portion honeycomb structured body. Therefore, a honeycomb fired body having an extremely small cross-sectional area is not present in the peripheral portion of the honeycomb structured body, and thus the ratio of the adhesive layer is relatively small, thereby reducing the heat capacity of the honeycomb structured body.

Therefore, the temperature of the honeycomb structured body is easily increased, and the conversion effect of the catalyst such as a NOx conversion catalyst can be fully exerted.

(4) In the honeycomb structured body according to the present embodiment, the cross-sectional surface areas of the plurality of the center-portion honeycomb fired bodies are the same with each other, and the cross-sectional surface areas of the plurality of the peripheral-portion honeycomb fired bodies are the same with each other. Accordingly, the honeycomb structured body can be easily manufactured.

(5) The honeycomb structured body according to the present embodiment contains inorganic particles and an inorganic binder. By containing inorganic particles, it is possible to provide a honeycomb structured body having a high specific surface, which can be preferably used as a honeycomb catalyst having a catalyst supported thereon.

(6) The honeycomb structured body according to the present embodiment contains inorganic fibers, and due to the inorganic fibers contained therein, the honeycomb structured body have high strength.

EXAMPLES

(Example 1)

The following description will discuss examples that more specifically disclosing the first embodiment of the present invention are shown below. However, the honeycomb structured body of the present invention should not be construed to be limited to those examples.

(1) An amount of 2250 g of γ-alumina particles (average particle diameter: 2 μm), 680 g of alumina fibers (average fiber diameter: 6 μm, average fiber length: 100 μm), and 2600g of alumina sol (solid concentration: 30% by weight) were mixed together. To the resulting mixture were added 320 g of methylcellulose as an organic binder, 290 g of a lubricant (UNILUB, manufactured by NOF Corporation), and 225 g of a plasticizer (glycerin), and then further mixed and kneaded to obtain a mixed composition (raw material composition). Next, the mixed composition was extrusion-molded by an extrusion-molding machine to provide a raw honeycomb molded body.

In this process, a raw honeycomb molded body having an almost the same shape with the center-portion honeycomb fired body 110 shown in Fig. 2, and a raw honeycomb molded body having an almost the same shape with the peripheral-portion honeycomb fired body 120 shown in Fig. 3 were manufactured.

(2) Next, the raw honeycomb molded bodies were sufficiently dried by using a microwave drying apparatus and a hot air drying apparatus, and then were allowed to stand at a temperature of 400°C for two hours for degreasing.

(3) Thereafter, the degreased honeycomb molded bodies were allowed to stand at a temperature of 700°C for two hours so as to be fired, and thereby a center-portion honeycomb fired body 110, which was made of γ-alumina and had a size of 66.3 mm × 66. 3 mm × 150 mm, the number of through holes (through hole density) of 93 pcs/cm$^2$ (600 cpsi) and a thickness of partition walls of 0.2 mm (8 mil) was manufactured. Also, a peripheral-portion honeycomb fired body 120, which had the same number of through holes (through hole density) and the same thickness of partition walls as those of the center-portion honeycomb fired body 110, and had a cross-sectional shape surrounded by three line segments and one arc, with two corners each formed by the two line segments out of these three line segments respectively having an angle of 90° and an angle of 135° (line segment 120a = 30.9 mm, line segment 120b = 66.9 mm and line segment 120c = 59.0 mm) was manufactured.

Here, the cross-sectional area of the center-portion honeycomb fired body 110 was 4396 mm$^2$ and the cross-sectional area of the peripheral-portion honeycomb fired body 120 was 3971 mm$^2$. Therefore, the cross-sectional area of the peripheral-portion honeycomb fired body 120 was 0.9 times larger than the cross-sectional area of the center-portion honeycomb fired body 110.

(4) An adhesive paste was applied to predetermined side faces of the center-portion honeycomb fired body 110 and the peripheral-portion honeycomb fired body 120, and four pieces of the center-portion honeycomb fired bodies 110 and eight pieces of the peripheral-portion honeycomb fired bodies 120 were combined with one another with the adhesive paste interposed therebetween so as to be arranged into a layout shown in Fig. 1. The adhesive paste was solidified at 100°C in 60 minutes to manufacture a round pillar-shaped ceramic block 103 having the adhesive layer 1 mm in thickness.

Here, an adhesive paste prepared by mixing 14.34 parts by weight of γ-alumina particles (average particle diameter: 2 μm), 16.37 parts by weight of alumina fibers (average fiber diameter: 6 μm, average fiber length: 100 μm), 17.35 parts by weight of an alumina sol (solid concentration: 30% by weight), 0.05 parts by weight of carboxymethyl cellulose (CMC), 0.98 parts by weight of polyvinyl alcohol (PVA), and 1.9 parts by weight of water was used as the adhesive paste.

(5) By using a coating material paste having the same composition as the adhesive paste used in the process (4), a coating material paste layer was formed on the peripheral portion of the ceramic block 103. Thereafter, the coating material paste layer was dried at 120°C to manufacture a round pillar-shaped honeycomb structured body 100 having a size of 254 mm in diameter × 150 mm in length with a coat layer 102 formed on the periphery thereof.

(6) The honeycomb structured body 100 manufactured in the above process (5) was immersed in an acetic acid solution containing 0.2 mol% of Ba(CO$_3$)$_2$ for one minute.

Thereafter, the honeycomb structured body 100 was dried at a temperature of 600°C for one hour so that the barium catalyst was supported on the honeycomb structured body 100.

(7) Further, the honeycomb structured body 100 was immersed in a solution (platinum solution) of diamine dinitro platinum nitric acid ([Pt (NH$_3$)$_2$(NO$_2$)$_2$]HNO$_3$, platinum concentration: 4.53% by weight) for one minute.

Thereafter, the honeycomb structured body 100 was dried at 110°C for two hours, and then fired at 500°C for one hour in a nitrogen atmosphere so that the platinum catalyst was supported on the honeycomb structured body 100.

The shape of a cross section of the honeycomb structured body 100 manufactured in Example 1 was as shown in Fig. 4.

According to the honeycomb structured body 100, in the cross section of the honeycomb structured body 100, the first peripheral-portion adhesive layer 101C and the second peripheral-portion adhesive layer 101D form an angle of 45°.

Moreover, in the cross-section of the honeycomb structured body 100, there exists a Y-shape portion formed by the first peripheral-portion adhesive layer 101C and the adhesive layers 101B each biding the center-portion honeycomb fired body 110 and the peripheral-portion honeycomb fired body 120.

(Examples 2 and 3, Comparative Examples 1 to 3)

A honeycomb structured body was manufactured in the same manner as Example 1, except that the size of the center-portion honeycomb fired body 110 (length of one side in the cross section) and the size of the peripheral-portion honeycomb fired body 120 (length of the line segment 120a, the line segment 120b, and the line segment 120c) were changed to the values described in Table 1.

Table 1 shows the length of one side of the center-portion honeycomb fired body 110, the length of each of the line segments of the peripheral-portion honeycomb fired body 120, the cross sectional area of the center-portion honeycomb fired body 110 and the peripheral-portion honeycomb fired body 120, and the ratio of the area of the peripheral-portion honeycomb fired body 120 to the area of the center-portion honeycomb fired body 110 (hereinafter, also simply referred to area ratio).

The diameter of each of the honeycomb structured bodies manufactured in Examples and Comparative Examples is 254 mm.

(Comparative Example 4)

(1) By performing the same procedures as the procedures (1) to (3) in Example 1, 16 pieces of honeycomb fired bodies which were similar to the center-portion honeycomb fired body 110 and had a size of 62.1 mm × 62.1 mm × 150 mm were manufactured.

(2) An adhesive paste was applied to predetermined side faces of the honeycomb fired bodies, and the 16 pieces of honeycomb fired bodies were combined with one another with the adhesive paste interposed therebetween. The adhesive paste was solidified at 180°C for 20 minutes to manufacture an aggregated body of the honeycomb fired bodies having a rectangular pillar-shape, in which the thickness of the adhesive layers was 1 mm.

Here, as the adhesive paste, the same adhesive paste as the one used in Example 1 was used.

(3) Next, the aggregated body of the honeycomb fired bodies was cut by using a diamond cutter, to manufacture an almost round pillar-shaped ceramic block.

Subsequently, a coating material paste layer was formed on the peripheral portion of the ceramic block by using the coating material paste made of the same materials as those of the adhesive paste. Further, this coating material paste layer was dried at a temperature of 120°C so that a round pillar-shaped honeycomb structured body having a size of 254.0 mm in diameter × 150.0 mm in length was manufactured.

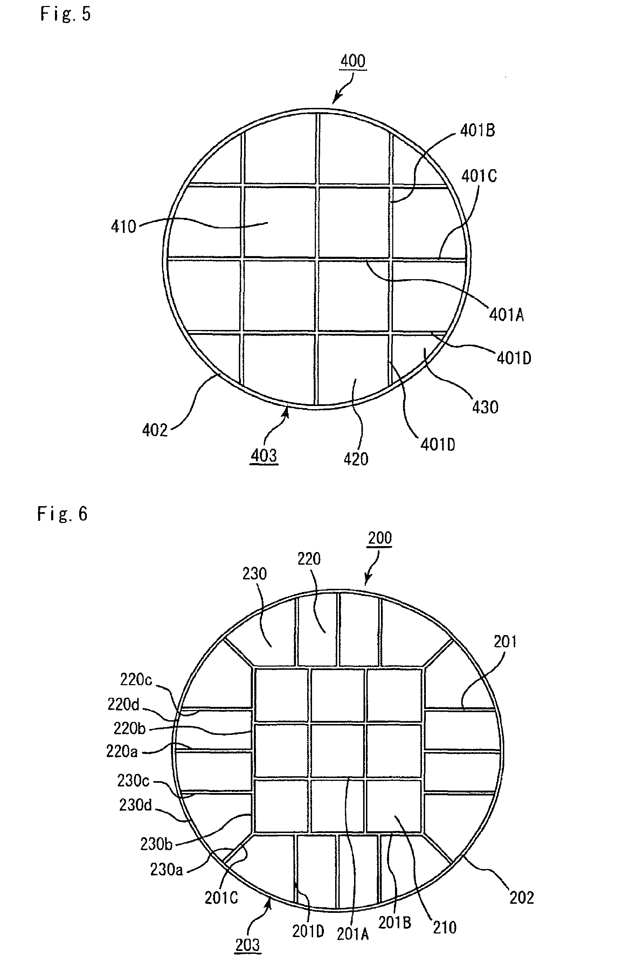

The cross-sectional shape of the honeycomb structured body manufactured in Comparative Example 4 is shown in Fig. 5.

Fig. 5 is a cross-sectional view that shows the honeycomb structured body 400 manufactured in Comparative Example 4. In Fig. 5, a reference numeral 410 represents a center-portion honeycomb fired body, reference numerals 420 and 430 represent peripheral-portion honeycomb fired bodies, a reference numeral 401 (401A, 401B, 401C, 401D) represents an adhesive layer, a reference numeral 402 represents a coat layer and a reference numeral 403 represents a ceramic block.

In the cross section of the honeycomb structured body 400, the first peripheral-portion adhesive layer 401C and the second peripheral-portion adhesive layer 401D are parallel or form an angle of 90°. Moreover, in the cross section of the honeycomb structured body 400, there is no Y-shape portion formed by the adhesive layers.

In the honeycomb structured body 400, the cross-sectional area of the center-portion honeycomb fired body 410 is 3856 $mm^2$, the cross-sectional area of the peripheral-portion honeycomb fired body 420 is 3548 $mm^2$, and the cross-sectional area of the peripheral-portion honeycomb fired body 430 is 1157 $mm^2$.

Therefore, the cross-sectional area of the peripheral-portion honeycomb fired body 420 is 0.9 times larger than the cross-sectional area of the center-portion honeycomb fired body 410, and the cross-sectional area of the peripheral-portion honeycomb fired body 430 is 0.3 times larger than the cross-sectional area of the center-portion honeycomb fired body 410.

The structures of the respective honeycomb structured bodies manufactured according to Examples and Comparative Examples were collectively shown in Table 1.

(Evaluation of honeycomb structured body)

(Measurement of isostatic fracture strength)

According to "test method of ceramic monolith carrier for car exhaust gas purifying catalyst (JASO M 505-87)" specified in Japanese Automobile Standards Organization which is issued by Society of Automotive Engineers of Japan, measurement of isostatic fracture strength was performed on the honeycomb structured bodies manufactured in each of Examples and Comparative Examples. The test results are all shown in Table 1.

(Thermal-shock test)

The honeycomb structured bodies manufactured in respective Examples and Comparative Examples were heated by a heater until the temperature of the honeycomb structured bodies increased to 700°C.

Thereafter, the honeycomb structured bodies were cooled by flowing room-temperature air through the through holes. After the honeycomb structured bodies were cooled to room temperature, presence of cracks was visually observed.

Table 1 shows the results of the thermal-shock test on each of the honeycomb structured bodies manufactured in each of Examples and Comparative Examples. In Table 1, "absent" refers to a case in which no cracks were observed, and "present" refers to a case in which any crack was observed.

(Evaluation of NOx conversion performance)

The honeycomb structured body manufactured in each of Examples and Comparative Examples was connected to a 6-liter diesel engine.

Then, a cycle including flowing of simulated exhaust gases in a lean condition for 55 seconds and flowing of simulated exhaust gases in a rich condition for 5 seconds was repeatedly performed for 10 times.

During this operation, NO concentration was measured at the front and back of the honeycomb structured body by using a NOx detection tube. The obtained NO concentrations in the whole operation time were integrated, and based on the difference between the integral NO concentration at the front of the honeycomb structured body and the integral NO concentration at the back of the honeycomb structured body, the NOx conversion rate was calculated according to the following equation.

$$\text{NOx conversion rate (\%)} = [(N_0-N_1) \; / \; N_0] \times 100$$

(In the equation, $N_0$ indicates the NOx concentration before the gases pass through the honeycomb structured body, and $N_1$ indicates the NOx concentration after the gases passed through the honeycomb structured body.)

The measurement results of the NOx conversion rate of the honeycomb structured bodies manufactured in Examples and Comparative Examples were collectively shown in Table 1.

Table 1

| | Area of honeycomb fired body (Note 1) | | | Size of honeycomb fired body (mn) | | | | Evaluation results | | |
|---|---|---|---|---|---|---|---|---|---|---|
| | Center portion | Peripheral portion | Area ratio | Center-portion | Peripheral portion | | | Isostatic strength | Thermal-shock test | NOx conversion rate |
| | (mm$^2$) | (mm$^2$) | | | 120a | 120b | 120c | (MPa) | | (%) |
| Example 1 | 4396 | 3971 | 0.9 | 66.3 | 30.9 | 66.9 | 59.0 | 2.1 | absent | 71 |
| Example 2 | 3856 | 4241 | 1.1 | 62.1 | 36.9 | 62.1 | 63.2 | 2.2 | absent | 73 |
| Example 3 | 3434 | 4454 | 1.3 | 58.6 | 41.8 | 58.6 | 66.7 | 2.1 | absent | 75 |
| Comparative Example 1 | 4747 | 3794 | 0.8 | 68.9 | 27.2 | 68.9 | 56.4 | 1.8 | absent | 62 |
| Comparative Example 2 | 3249 | 4547 | 1.4 | 57.0 | 44.1 | 57.0 | 68.3 | 1.9 | present | 75 |
| Comparative Example 3 | 5013 | 3661 | 0.7 | 70.8 | 24.6 | 70.8 | 54.5 | 1.7 | present | 59 |
| Comparative Example 4 | 3856 | 3548/1157 | 0.9/0.3 | 62.1 | - | - | - | 1.1 | absent | 55 |
| (Note 1) The data shown for Comparative Example 4 is area (ratio) of the peripheral-portion 5 honeycomb fired body 420 / area (ratio) of peripheral-portion honeycomb fired body 430. | | | | | | | | | | |

As is clear from the results shown in Table 1, the honeycomb structured bodies manufactured in Examples 1 to 3 had high isostatic fracture strength, had no occurrence of cracks caused by thermal-shock test, and had an excellent NOx conversion ability.

On the other hand, in the honeycomb structured body manufactured in Comparative Example 1, the ratio of the area of the outer-portion honeycomb fired body to the area of the center-portion honeycomb fired body was as small as 0.8. Therefore, the heat capacity of the honeycomb structured body was high, and the NOx conversion rate was small. As for the honeycomb structured body manufactured in Comparative Example 2, the above-mentioned area ratio was as high as 1.4, and thus cracks caused by thermal stress were generated in the peripheral-portion honeycomb fired body during the thermal-shock test.

In the honeycomb structured body manufactured in Comparative Example 3, the size of the center-portion honeycomb fired body was as large as $5013 \, mm^2$, and the above-mentioned area ratio was as small as 0.7. Therefore, the honeycomb structured body had a low isostatic fracture strength, and was easily damaged by thermal shock.

In the honeycomb structured body manufactured in Comparative Example 4, since the adhesive layers were formed in a lattice pattern, the isostatic fracture strength was low. Further, due to presence of the honeycomb fired body 430 in which the above-mentioned area ratio was as small as 0.3 in the peripheral portion, the honeycomb structured body had a high heat capacity and a low NOx conversion rate.

(Second Embodiment)

Referring to Figures, the following description will discuss a second embodiment that is another embodiment of the honeycomb structured body of the present invention.

Fig. 6 is a cross-sectional view of a honeycomb structured body according to the second embodiment.

As shown in Fig. 6, a honeycomb structured body 200 of the present embodiment has a structure in which a plurality of center-portion honeycomb fired bodies 210 and pluralities of peripheral-portion honeycomb fired bodies 220 and 230 are combined with one another with adhesive layers 201A to 201D interposed therebetween so that a ceramic block 203 is formed. A coat layer 202 is formed on the periphery of the ceramic block 203.

The shape of the cross section of each of the center-portion honeycomb fired bodies 210 is a square.

The cross section of each of the peripheral-portion honeycomb fired bodies 220 is formed into a shape that is surrounded by three line segments 220a, 220b and 220c and an arc 220d. Both of two angles made by two line segments out of these three line segments (an angle formed by the line segment 220a and the line segment 220b and an angle formed by the line segment 220b and the line segment 220c) are 90°.

The cross section of each of the peripheral-portion honeycomb fired bodies 230 is formed into a shape that is surrounded by three line segments 230a, 230b and 230c and an arc 230d. The two angles made by two line segments out of these three line segments (an angle formed by the line segment 230b and the line segment 230c and an angle formed by the line segment 230a and the line segment 230b) are 90° and 135°, respectively.

Namely, the center-portion honeycomb fired body 210 is the same as the center-portion honeycomb fired body 110 forming the honeycomb structured body of the first embodiment. The peripheral-portion honeycomb fired bodies 220 and 230 have the same functions as that of the center-portion honeycomb fired body 110 forming the honeycomb structured body of the first embodiment although outside shapes of those peripheral-portion honeycomb fired bodies are different from that of the center-portion honeycomb fired body 110.

Moreover, the materials of the honeycomb fired bodies 210, 220, and 230 are the same as those of the center-portion honeycomb fired body 110 and the peripheral-portion honeycomb fired body 120 according to the first embodiment.

As shown in Fig. 6, in the honeycomb structured body 200, nine pieces of center-portion honeycomb fired bodies 210 are located in the center portion of the cross section of the honeycomb structured body 200, with eight pieces of peripheral-portion honeycomb fired bodies 220 and eight pieces of peripheral-portion honeycomb fired bodies 230 being located on the periphery of the nine pieces of center-portion honeycomb fired bodies 210. These honeycomb fired bodies are combined with one another with adhesive layers 201A to 201D interposed therebetween so that the cross section of the honeycomb structured body 200 (ceramic block 203) is formed into a round shape.

The nine pieces of the center-portion honeycomb fired bodies 210 combined with one another by interposing the adhesive layer 201A therebetween form the center portion in the cross-section of the honeycomb structured body 200. The total 16 pieces of the peripheral-portion honeycomb fired bodies 220, 230 combined with one another by interposing the adhesive layers 201C, 201D form the peripheral portion in the cross section of the honeycomb structured body 200.

In the cross section of the honeycomb structured body 200 having the above-mentioned configuration, the region occupied by the nine pieces of the center-portion honeycomb fired bodies 210, the adhesive layer 201A combining the center-portion honeycomb fired bodies 21 0 with one another, the adhesive layer 201B combining the center-portion honeycomb fired body 210 with the peripheral-portion honeycomb fired bodies 220, 230 corresponds to the center portion, and the region occupied by the 16 pieces of the peripheral-portion honeycomb fired bodies 220, 230, and the adhesive layers 201C, 201D combining the peripheral-portion honeycomb fired bodies 220, 230 to each other corresponds to the peripheral portion.

Further, in the cross section of the honeycomb structured body 200, the adhesive layer 201C (first peripheral-portion adhesive layer) that is formed in a direction from a corner points of the center portion to the peripheral side surface of the honeycomb structured body 200 and the adhesive layer 201D (second peripheral-portion adhesive layer) that is formed in a direction from a point other than the corner points of the center portion to the peripheral side surface of the honeycomb structured body 200, among the adhesive layers 201C, 201D in the peripheral portion, form an angle of 45°.

When the first peripheral-portion adhesive layer and the second peripheral-portion adhesive layer form an angle of 45° as mentioned above, it is possible to prevent damages from occurring in the honeycomb structured body.

Moreover, in the honeycomb structured body 200, at the corner point of the above-mentioned center-portion, the first peripheral-portion adhesive layer 201C and the adhesive layers 201B combining the center-portion honeycomb fired body 210 with the peripheral-portion honeycomb fired body 220 form a Y-shape.

When there is a portion where the adhesive layers form a Y-shape in a cross-section of the honeycomb structured body as mentioned above, such a configuration is suitable for reducing the stress in the honeycomb structured body, and thus it is possible to prevent damages from occurring in the honeycomb structured body.

Here, in the honeycomb structured body 200, the cross-sectional area of the center-portion honeycomb fired body 210 is 2500 mm$^2$ to 5000 mm$^2$. The cross-sectional area of the peripheral-portion honeycomb fired bodies 220, 230 is 0.9 to 1.3 times larger than that of the cross-sectional area of the center-portion honeycomb fired body 210.

Therefore, no honeycomb fired bodies having an extremely small cross-sectional area are located in the peripheral portion of the honeycomb structured body 200, and of course, an adhesive layer to be used for combining such small honeycomb fired bodies to one another is not required. For this reason, the honeycomb structured body 200 hardly has a temperature distribution between the center portion and the peripheral portion.

The following description will discuss a method for manufacturing the honeycomb structured body of the present embodiment.

The method for manufacturing the honeycomb structured body of the present embodiment is the same as the method for manufacturing the honeycomb structured body of the first embodiment, except for the following points.

That is, the honeycomb structured body of the present embodiment can be manufactured by using the same method as the method for manufacturing the honeycomb structured body of the first embodiment, except that the shapes of honeycomb molded bodies formed in the molding process of the manufacturing method according to the first embodiment have virtually the same shapes as those of the center-portion honeycomb fired body 210 and the peripheral-portion honeycomb fired bodies 220 and 230 as shown in Fig. 6, and except that, upon carrying out the combining process of the manufacturing method of the first embodiment, the respective honeycomb fired bodies are combined with one another so that the center-portion honeycomb fired body 210 and the peripheral-portion honeycomb fired bodies 220 and 230 are located as shown in Fig. 6.

The honeycomb structured body of the present embodiment is allowed to exert the same effects as those of the honeycomb structured body of the first embodiment.

(Other embodiments)

In the methods for manufacturing a honeycomb structured body according to the first and second embodiments, a honeycomb structured body is manufactured by forming a honeycomb fired body prepared in a predetermined shape. However, the honeycomb structured body according to an embodiment of the present invention may be manufactured according to the method described below.

Hereinafter, another method for manufacturing a honeycomb structured body according to an embodiment of the present invention will be described by exemplifying the case of manufacturing the honeycomb structured body according to the first embodiment.

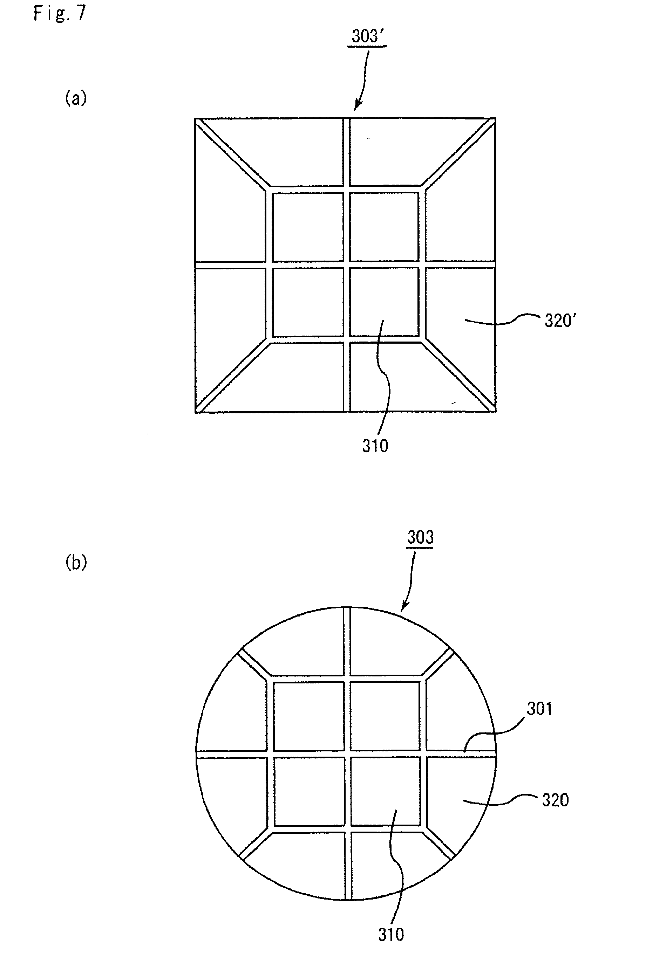

Figs. 7(a) and 7(b) are cross-sectional views for describing another example of a method for manufacturing a honeycomb structured body according to an embodiment of the present invention.

(1) A honeycomb fired body is manufactured by the same method as the method in the first embodiment.

In this example, a center-portion honeycomb fired body 310 having a square cross-sectional shape and a peripheral-portion honeycomb fired body 320' having a trapezoid cross-sectional shape are manufactured (see Fig. 7(a)).

(2) Next, in the same manner as in the process (4) of the first embodiment, the center-portion honeycomb fired bodies 310 and the peripheral-portion honeycomb fired bodies 320' are combined with one another with the adhesive paste layer interposed therebetween so as to be arranged into a layout shown in Fig. 7(a). Moreover, an aggregated body 303' of honeycomb fired bodies is manufactured by solidifying the adhesive paste layer (see Fig. 7(a)).

(3) Next, a peripheral cutting process is performed in which the side faces of the aggregated body 303' of honeycomb fired bodies are cut by using a diamond cutter or the like to form a round pillar shape so as to manufacture a ceramic block 303 in which the center-portion honeycomb fired bodies 310 and the peripheral-portion honeycomb fired bodies 320 are combined with one another with the adhesive layer 301 interposed therebetween (see Fig. 7(b)).
Then, if needed, a coat layer (not illustrated) is formed on the peripheral side face of the ceramic block 303 to complete a honeycomb structured body.

The cross-sectional shape of the honeycomb structured body according to the embodiments of the present invention is not limited to a round shape. The cross-sectional shape may be an elliptical shape, an elongated round shape (racetrack shape) or the like.

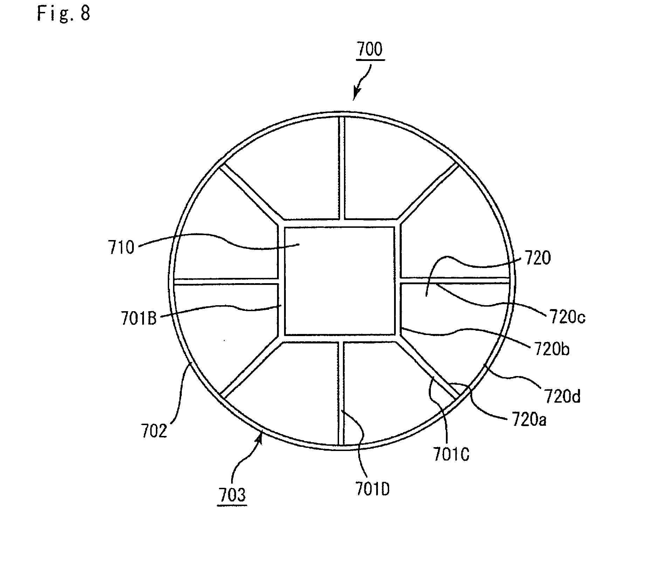

Moreover, in the honeycomb structured body according to the embodiments of the present invention, the number of the center-portion honeycomb fired body is not limited to plural, and may be one.
Specifically, the shape of a cross section of the honeycomb structured body may be a shape shown in Fig. 8.
Fig. 8 is a cross-sectional view of a honeycomb structured body according to another embodiment of the present invention.

The honeycomb structured body 700 as illustrated in Fig. 8 has the same structure as that of the honeycomb structured body 100 of the first embodiment, except that the number of the center-portion honeycomb fired bodies is different.
That is, the honeycomb structured body 700 as illustrated in Fig. 8 comprises one center-portion honeycomb fired body 710, instead of the four pieces of the center-portion honeycomb fired bodies 110 combined with one another with the adhesive layer 101A interposed therebetween in the honeycomb structured body 100 as illustrated in Fig. 1.
Compared with the center-portion honeycomb fired body 110, the center-portion honeycomb fired body 710 has a larger cross-sectional area but has the same functions.

In the cross-section of the honeycomb structured body 700 of this kind, the first peripheral-portion adhesive layer 701C and the second peripheral-portion adhesive layer 701D form an angle of 45°.
Further, in the honeycomb structured body 700, the first peripheral-portion adhesive layer 701C and the adhesive layers 701B combining the center-portion honeycomb fired body 710 with the peripheral-portion honeycomb fired body 720 form a Y-shape at a corner point of the center portion.
Therefore, the honeycomb structured body 700 can exert the same effects as the effects described in the first embodiment.
Here, in Fig. 8, the numeral 702 represents a coat layer, and the numeral 703 represents a ceramic block.

In the cross section of the honeycomb structured body according to the present invention, the angle formed by the first peripheral-portion adhesive layer and the second peripheral portion adhesive layer is not limited to 45°, and may be an angle of 40° to 50°.
This is because, the angle formed by the first peripheral-portion adhesive layer and the second peripheral-portion adhesive layer within the above range is appropriate for preventing damages due to stress generated in various directions on the peripheral surface of the honeycomb structured body.
Although, all the angles formed by the first peripheral-portion adhesive layer and the second peripheral-portion adhesive layer are angles of 40° to 50° in the honeycomb structured body of the embodiment described above, the angles may be any angle as long as at least one angle formed by one of the first peripheral-portion adhesive layer and one of the second peripheral-portion adhesive layer is 40° to 50°.

The thickness of the partition wall of the honeycomb fired body is not particularly limited, and the preferable lower limit is 0.05 mm, more preferable lower limit is 0.10 mm, and still more preferable lower limit is 0.15 mm. On the other hand, the preferable upper limit is 0.40 mm, and more preferable upper limit is 0.35 mm.

The partition wall having a thickness of less than 0.05 mm may reduce the strength of the honeycomb fired body, while the partition wall having a thickness of more than 0.40 reduces areas to contact to exhaust gases and does not allow the exhaust gases to deeply penetrate the partition wall. Therefore, contact between exhaust gases and the catalyst supported inside the partition wall becomes difficult, and thus the catalytic effect may be reduced.

Moreover, the preferable lower limit of the density of the through holes in the honeycomb fired body is 15.5 pcs/cm$^2$ (100 cpsi), and more preferable lower limit is 46. 5 pcs/cm$^2$ (300 cpsi), and still more preferable lower limit is 62.0 pcs/cm$^2$ (400 cpsi). On the other hand, the preferable upper limit of the density of the through holes is 186 pcs/cm$^2$ (1200 cpsi), and more preferable lower upper limit is 170.5 pcs/cm$^2$ (1100 cpsi), and still more preferable upper limit is 155 pcs/cm$^2$ (1000 cpsi).
This is because, the through hole density of less than 15.5 pcs/cm$^2$ reduces the area of walls to contact to exhaust gases inside the honeycomb fired body, while the through hole density of 186 pcs/cm$^2$ causes an increase of pressure loss, and makes production of the honeycomb fired body difficult.

The thickness of the adhesive layer of the honeycomb fired body is not particularly limited, and the preferable thickness is 0.5 to 5.0 mm.
This is because, the adhesive layer having a thickness of less than 0.5 mmmay not have a sufficient combining strength. On the other hand, since the adhesive layer is a portion that is not functioning as catalyst carrier, the adhesive layer having a thickness of more than 5 mm reduces the specific surface per unit volume of the honeycomb structured body. Therefore, when the honeycomb structured body is used as a catalyst carrier for converting exhaust gases, high dispersion of the catalyst may not sufficiently be achieved.
Further, the adhesive layer having a thickness of more than 5 mm may cause increase of pressure loss.

The thickness of the coat layer is not particularly limited, and the preferable thickness is 0.1 mm to 2 mm. The coat layer having a thickness of less than 0.1 mm may not be able to protect the peripheral surface, and thus the strength may not be improved. On the other hand, the coat layer having a thickness of more than 2 mm reduces the specific area per unit volume in the honeycomb structured body. Therefore, when the honeycomb structured body is used as a catalyst carrier for converting exhaust gases, high dispersion of the catalyst may not sufficiently be achieved.

In the combining process in the method for manufacturing the honeycomb structured body of each embodiment of the present invention, instead of the method in which an adhesive paste is applied to side faces of each honeycomb fired body, for example, another method may be used in which, with respective honeycomb fired bodies temporarily secured in a frame having virtually the same shape as the shape of a ceramic block (or an aggregated body of honeycomb fired bodies) to be manufactured, an adhesive paste is injected between the respective honeycomb fired bodies.

The plasticizer contained in the raw material composition is not particularly limited, and an example thereof is glycerin, and the like. The lubricant is not particularly limited, and examples thereof include polyoxyalkylene compounds such as polyoxyethylene alkyl ether, polyoxypropylene alkyl ether, and the like.
Specific examples of the lubricant include polyoxyethylene monobutyl ether, polyoxypropylene monobutyl ether, and the like.
Also, in some cases, the plasticizer or lubricant may not be contained in the raw material composition.

The diffusion medium contained in the raw material composition is not particularly limited, and examples thereof include water, an organic solvent (e.g. benzene), an alcohol (e.g. methanol), and the like.
The molding auxiliary is not particularly limited, and examples thereof include ethylene glycol, dextrin, fatty acids, fatty acid soap, polyalcohol, and the like.

BRIEF DESCRIPTION OF THE DRAWINGS

Fig. 1 is a perspective view schematically showing a honeycomb structured body according to the first embodiment.
Fig. 2 is a perspective view schematically showing a center-portion honeycomb fired body in the honeycomb structured body according to the first embodiment.
Fig. 3 is a perspective view schematically showing a peripheral-portion honeycomb fired body according to the first embodiment.
Fig. 4 is an A-A line cross-sectional view of the honeycomb structured body shown in Fig. 1.
Fig. 5 is a cross-sectional view of a honeycomb structured body manufactured in Comparative Example 4.
Fig. 6 is a cross-sectional view of a honeycomb structured body according to the second embodiment.
Figs. 7(a) and 7(b) are cross-sectional views for describing another example of a method for manufacturing a honeycomb structured body according to an embodiment of the present invention.
Fig. 8 is a cross-sectional view of a honeycomb structured body according to another embodiment of the present invention.

EXPLANATION OF SYMBOLS

100, 200, 700 Honeycomb structured body
101, 201, 701 Adhesive layer
102, 202, 702 Coat layer
103, 203, 703 Ceramic block
110, 210, 710 Center-portion honeycomb fired body
120, 220, 230, 720 Peripheral-portion honeycomb fired body
111, 121 Through hole
113, 123 Partition wall

**Claims**

1.  A honeycomb structured body comprising
    a plurality of pillar-shaped honeycomb fired bodies combined with one another by interposing an adhesive layer therebetween, each of the honeycomb fired bodies having a large number of through holes, which are longitudinally formed in parallel with one another and divided by a partition wall, wherein

said honeycomb fired bodies comprise inorganic particles and an inorganic binder,

a cross section perpendicular to the longitudinal direction of said honeycomb structured body includes a peripheral portion of the honeycomb structured body and a center portion of the honeycomb structured body, the center portion having a rectangular cross-sectional shape and being located at the inner side of the peripheral portion,

said honeycomb fired bodies include a center-portion honeycomb fired body located in the center portion and a peripheral-portion honeycomb fired body located in the peripheral portion,

said center portion comprises a single piece of said center-portion honeycomb fired body, or a plurality of said center-portion honeycomb fired bodies combined with one another by interposing said adhesive layer therebetween,

said center-portion honeycomb fired body has a square cross-sectional shape perpendicular to the longitudinal direction of the honeycomb structured body,

said center-portion honeycomb fired body has an area of 2500 to 5000 mm$^2$ in said cross-section,

said peripheral portion comprises a plurality of said peripheral-portion honeycomb fired bodies combined with one another by interposing said adhesive layer therebetween,

a cross-sectional shape perpendicular to said longitudinal direction of said peripheral-portion honeycomb fired body is different from a cross-sectional shape perpendicular to said longitudinal direction of said center-portion honeycomb fired body, and

a cross-sectional area perpendicular to said longitudinal direction of each of the peripheral-portion honeycomb fired bodies is 0.9 to 1.3 times larger than a cross-sectional area perpendicular to said longitudinal direction of said center-portion honeycomb fired body.

2. The honeycomb structured body according to claim 1, wherein
   a cross section perpendicular to the longitudinal direction of said honeycomb structured body includes at least one adhesive layer formed in a direction extending from a corner point of said center portion to a peripheral side surface of said honeycomb structured body, among the adhesive layers in said peripheral portion, and
   said adhesive layer extending from the corner point of said center portion to the peripheral side surface of said honeycomb structured body forms an angle of 40 to 50 degrees with at least one adhesive layer formed in a direction extending from a point other than the corner points of the center portion to the peripheral side surface of said honeycomb structured body.

3. The honeycomb structured body according to claim 1 or 2, comprising a plurality of said center-portion honeycomb fired bodies and a plurality of said peripheral-portion honeycomb fired bodies,
   wherein the cross-sectional surface areas of the plurality of the center-portion honeycomb fired bodies are the same with each other, and
   the cross-sectional surface areas of the plurality of the peripheral-portion honeycomb fired bodies are the same with each other.

4. The honeycomb structured body according to any of claims 1 to 3,
   wherein the cross-sectional shape perpendicular to said longitudinal direction of said peripheral-portion honeycomb fired body is formed into a shape surrounded by three line segments and one curved line, and
   two angles made by the two line segments out of said three line segments are a right angle and an obtuse angle.

5. The honeycomb structured body according to any of claims 1 to 4, further comprising an inorganic fiber.

6. The honeycomb structured body according to claim 5,
   wherein said inorganic fiber comprises at least one kind selected from the group consisting of alumina, silica, silicon carbide, silica-alumina, glass, potassium titanate, and aluminum borate.

7. The honeycomb structured body according to any of claims 1 to 6,
   wherein a catalyst is supported on said partition wall.

8. The honeycomb structured body according to claim 7,
   wherein said catalyst comprises at least one kind selected from the group consisting of a noble metal, an alkali metal, and an alkali earth metal.

9. The honeycomb structured body according to claim 8,
   wherein said noble metal comprises platinum, palladium, or rhodium.

10. The honeycomb structured body according to claim 8,

wherein said alkali metal comprises potassium or sodium.

11. The honeycomb structured body according to claim 8,
wherein said alkali earth metal comprises magnesium, barium, or calcium.

12. The honeycomb structured body according to any of claims 1 to 11,
wherein said inorganic binder comprises at least one kind selected from the group consisting of alumina sol, silica sol, titania sol, water glass, sepiolite, and attapulgite.

13. The honeycomb structured body according to any of claims 1 to 12,
wherein a cross-sectional shape perpendicular to the longitudinal direction of the honeycomb structured body is a round shape, an elliptical shape, or an elongated round shape.

**Patentansprüche**

1. Wabenstrukturkörper, der umfasst
eine Mehrzahl von säulenförmigen gebrannten Wabenkörpern, die durch dazwischen Vorsehen einer Haftvermittlerschicht miteinander kombiniert sind, wobei jeder der gebrannten Wabenkörper eine große Anzahl von Durchgangsöffnungen aufweist, die parallel zueinander in Längsrichtung ausgebildet sind und durch eine Trennwand unterteilt sind, wobei
die gebrannten Wabenkörper anorganische Teilchen und ein anorganisches Bindemittel umfassen,
ein Querschnitt senkrecht auf der Längsrichtung des Wabenstrukturkörpers einen Umfangsabschnitt des Wabenstrukturkörpers und einen mittleren Abschnitt des Wabenstrukturkörpers enthält, wobei der mittlere Abschnitt eine rechteckförmige Querschnittsgestalt aufweist und auf der Innenseite des Umfangsabschnitts positioniert ist,
die gebrannten Wabenkörper einen gebrannten Wabenkörper des mittleren Abschnitts, der in dem mittleren Abschnitt positioniert ist, und einen gebrannten Wabenkörper des Umfangsabschnitts, der in dem Umfangsabschnitt positioniert ist, enthalten,
der mittlere Abschnitt ein einziges Stück des gebrannten Wabenkörpers des mittleren Abschnitts oder eine Mehrzahl der gebrannten Wabenkörper des mittleren Abschnitts umfasst, die durch dazwischen vorsehen der Haftvermittlerschicht miteinander kombiniert sind,
der gebrannte Wabenkörper des mittleren Abschnitts eine quadratische Querschnittsform senkrecht auf der Längsrichtung des Wabenstrukturkörpers aufweist,
der Querschnitt des gebrannten Wabenkörpers des mittleren Abschnitts eine Fläche von 2.500 bis 5.000 mm$^2$ aufweist,
der Umfangsabschnitt eine Mehrzahl der gebrannten Wabenkörper des Umfangsabschnitts umfasst, die durch dazwischen Vorsehen der Haftvermittlerschicht miteinander kombiniert sind,
eine Querschnittsgestalt senkrecht auf der Längsrichtung des gebrannten Wabenkörpers des Umfangsabschnitts sich von einer Querschnittsgestalt senkrecht auf der Längsrichtung des gebrannten Wabenkörpers des mittleren Abschnitts unterscheidet und
eine Querschnittsfläche senkrecht auf der Längsrichtung von jedem der gebrannten Wabenkörper des Umfangsabschnitts das 0,9 bis 1,3-fache einer Querschnittsfläche senkrecht auf der Längsrichtung des gebrannten Wabenkörpers des mittleren Abschnitts beträgt.

2. Wabenstrukturkörper nach Anspruch 1, bei dem
ein Querschnitt senkrecht auf der Längsrichtung des Wabenstrukturkörpers unter den Haftvermittlerschichten in dem Umfangsabschnitt wenigstens eine Haftvermittlerschicht enthält, die in einer Richtung ausgebildet ist, welche sich von einem Eckpunkt des mittleren Abschnitts zu einer Oberfläche der Umfangsseite des Wabenstrukturkörpers erstreckt, und
die Haftvermittlerschicht, die sich von dem Eckpunkt des mittleren Abschnitts zur Oberfläche der Umfangsseite des Wabenstrukturkörpers erstreckt, mit wenigstens einer Haftvermittlerschicht einen Winkel von 40 bis 50 Grad bildet, die in einer Richtung ausgebildet ist, die sich von einem Punkt, der sich von den Eckpunkten des mittleren Abschnitts unterscheidet, zu einer Oberfläche der Umfangsseite des Wabenstrukturkörpers erstreckt.

3. Wabenstrukturkörper nach Anspruch 1 oder 2, der eine Mehrzahl der gebrannten Wabenkörper des mittleren Abschnitts und eine Mehrzahl der gebrannten Wabenkörper des Umfangsabschnitts umfasst,
wobei die Querschnittsflächen der Mehrzahl der gebrannten Wabenkörper des mittleren Abschnitts jeweils identisch sind, und

die Querschnittsflächen der Mehrzahl der gebrannten Wabenkörper des Umfangsabschnitts jeweils identisch sind.

4. Wabenstrukturkörper nach einem der Ansprüche 1 bis 3, bei dem die Querschnittsgestalt senkrecht auf der Längsrichtung des gebrannten Wabenkörpers des Umfangsabschnitts als Gestalt ausgebildet ist, welche von drei Liniensegmenten und einer gekrümmten Linie umgeben ist, und
zwei Winkel, die von den zwei Liniensegmenten unter den drei Liniensegmenten gebildet werden, ein rechter Winkel und ein stumpfer Winkel sind.

5. Wabenstrukturkörper nach einem der Ansprüche 1 bis 4, der ferner anorganische Fasern umfasst.

6. Wabenstrukturkörper nach Anspruch 5, bei dem die anorganischen Fasern wenigstens eine Art umfassen, die aus der Gruppe ausgewählt ist, die aus Aluminiumoxid, Silica, Siliziumcarbid, Silica-Aluminiumoxid, Glas, Kalium, Kaliumtitanat und Aluminiumborat besteht.

7. Wabenstrukturkörper nach einem der Ansprüche 1 bis 6, bei dem ein Katalysator von der Trennwand getragen wird.

8. Wabenstrukturkörper nach Anspruch 7, bei dem der Katalysator wenigstens eine Art umfasst, die aus der Gruppe ausgewählt ist, welche aus einem Edelmetall, einem Alkalimetall und einem Alkalierdmetall besteht.

9. Wabenstrukturkörper nach Anspruch 8, bei dem das Edelmetall Platin, Palladium oder Rhodium umfasst.

10. Wabenstrukturkörper nach Anspruch 8, bei dem das Alkalimetall Kalium oder Natrium umfasst.

11. Wabenstrukturkörper nach Anspruch 8, bei dem das Alkalierdmetall Magnesium, Barium oder Calcium umfasst.

12. Wabenstrukturkörper nach einem der Ansprüche 1 bis 11, bei dem das anorganische Bindemittel wenigstens eine Art umfasst, welche aus der Gruppe ausgewählt ist, die aus Aluminiumoxid-Sol, Silizium-Sol, Titandioxid-Sol, Wasserglas, Sepiolith und Attapulgit besteht.

13. Wabenstrukturkörper nach einem der Ansprüche 1 bis 12, bei dem eine Querschnittsform senkrecht auf der Längsrichtung des Wabenstrukturkörpers eine runde Form, eine elliptische Form oder eine längliche runde Form ist.

**Revendications**

1. Corps structuré en nid d'abeilles comprenant une pluralité de corps cuits en nid d'abeilles en forme de pilier combinés entre eux en interposant une couche adhésive entre ceux-ci, chacun des corps cuits en nid d'abeilles ayant un grand nombre de trous traversants, qui sont formés longitudinalement parallèlement les uns aux autres et divisés par une paroi de séparation, dans lequel
lesdits corps cuits en nid d'abeilles comprennent des particules inorganiques et un liant inorganique,
une section transversale perpendiculaire à la direction longitudinale dudit corps structuré en nid d'abeilles inclut une partie périphérique du corps structuré en nid d'abeilles et une partie centrale du corps structuré en nid d'abeilles, la partie centrale ayant une forme rectangulaire en coupe transversale et étant située au niveau du côté intérieur de la partie périphérique,
lesdits corps cuits en nid d'abeilles incluent un corps cuit en nid d'abeilles de partie centrale situé dans la partie centrale et un corps cuit en nid d'abeilles de partie périphérique situé dans la partie périphérique,
ladite partie centrale comprend une seule pièce dudit corps cuit en nid d'abeilles de partie centrale, ou une pluralité desdits corps cuits en nid d'abeilles de partie centrale combinés entre eux en interposant ladite couche adhésive entre ceux-ci,
ledit corps cuit en nid d'abeilles de partie centrale a une forme carrée en coupe transversale perpendiculaire à la direction longitudinale du corps structuré en nid d'abeilles,
ledit corps cuit en nid d'abeilles de partie centrale a une surface de 2 500 à 5 000 mm$^2$ dans ladite section transversale, ladite partie périphérique comprend une pluralité desdits corps cuits en nid d'abeilles de partie périphérique combinés entre eux en interposant ladite couche adhésive entre ceux-ci,
une forme en coupe transversale perpendiculaire à ladite direction longitudinale dudit corps cuit en nid d'abeilles de partie périphérique diffère d'une forme en coupe transversale perpendiculaire à la direction longitudinale dudit corps cuit en nid d'abeilles de partie centrale, et
une surface en coupe transversale perpendiculaire à ladite direction longitudinale de chacun des corps cuits en nid d'abeilles de partie périphérique est de 0,9 à 1,3 fois plus grande qu'une surface en coupe transversale perpendiculaire à ladite direction longitudinale dudit corps cuit en nid d'abeilles de partie centrale.

2. Corps structuré en nid d'abeilles selon la revendication 1, dans lequel
une section transversale perpendiculaire. à la direction longitudinale dudit corps structuré en nid d'abeilles inclut au moins une couche adhésive formée dans une direction s'étendant d'un point de coin de ladite partie centrale jusqu'à une surface latérale périphérique dudit corps structuré en nid d'abeilles, parmi les couches adhésives dans ladite partie périphérique, et
ladite couche adhésive s'étendant du point de coin de ladite partie centrale jusqu'à la surface latérale périphérique dudit corps structuré en nid d'abeilles forme un angle de 40 à 50 degrés avec au moins une couche adhésive formée dans une direction s'étendant d'un point autre que les points de coin de la partie centrale jusqu'à la surface latérale périphérique dudit corps structuré en nid d'abeilles.

3. Corps structuré en nid d'abeilles selon la revendication 1 ou 2, comprenant une pluralité desdits corps cuits en nid d'abeilles de partie centrale et une pluralité desdits corps cuits en nid d'abeilles de partie périphérique,
dans lequel les superficies en coupe transversale de la pluralité des corps cuits en nid d'abeilles de partie centrale sont les mêmes les unes par rapport aux autres, et
les superficies en coupe transversale de la pluralité des corps cuits en nid d'abeilles de partie périphérique sont les mêmes les unes par rapport aux autres.

4. Corps structuré en nid d'abeilles selon l'une quelconque des revendications 1 à 3,
dans lequel la forme en coupe transversale perpendiculaire à ladite direction longitudinale dudit corps cuit en nid d'abeilles de partie périphérique est formée en une forme entourée par trois segments de droite et une ligne courbe, et deux angles faits par les deux segments de droite parmi lesdits trois segments de droite sont un angle droit et un angle obtus.

5. Corps structuré en nid d'abeilles selon l'une quelconque des revendications 1 à 4, comprenant en outre une fibre inorganique.

6. Corps structuré en nid d'abeilles selon la revendication 5,
dans lequel ladite fibre inorganique comprend au moins une sorte sélectionnée à partir du groupe constitué par l'alumine, la silice, le carbure de silicium, la silice - alumine, le verre, le titanate de potassium et le borate d'aluminium.

7. Corps structuré en nid d'abeilles selon l'une quelconque des revendications 1 à 6,
dans lequel un catalyseur est supporté sur ladite paroi de séparation.

8. Corps structuré en nid d'abeilles selon la revendication 7,
dans lequel ledit catalyseur comprend au moins une sorte sélectionnée à partir du groupe constitué par un métal noble, un métal alcalin et un métal alcalino-terreux.

9. Corps structuré en nid d'abeilles selon la revendication 8,
dans lequel ledit métal noble comprend le platine, le palladium, ou le rhodium.

10. Corps structuré en nid d'abeilles selon la revendication 8,
dans lequel ledit métal alcalin comprend le potassium ou le sodium.

11. Corps structuré en nid d'abeilles selon la revendication 8,
dans lequel ledit métal alcalino-terreux comprend le magnésium, le baryum, ou le calcium.

12. Corps structuré en nid d'abeilles selon l'une quelconque des revendications 1 à 11,
dans lequel ledit liant inorganique comprend au moins une sorte sélectionnée à partir du groupe constitué par un sol d'alumine, un sol de silice, un sol d'oxyde de titane, le silicate de sodium, la sépiolite et l'attapulgite.

13. Corps structuré en nid d'abeilles selon l'une quelconque des revendications 1 à 12,
dans lequel une forme en coupe transversale perpendiculaire à la direction longitudinale du corps structuré en nid d'abeilles est une forme arrondie, une forme elliptique, ou une forme ronde allongée.

Fig. 1

Fig. 2

Fig. 3

Fig. 4

Fig. 5

Fig. 6

Fig. 7

(a)

<u>303′</u>

320′

310

(b)

<u>303</u>

301

320

310

Fig. 8

**EP 2 105 427 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05063653 A1